# EUROPÄISCHE PATENTANMELDUNG

(11) **EP 1 039 413 A2**
(43) Veröffentlichungstag der Anmeldung: **27.09.2000**
(21) Anmeldenummer: 00106582.0
(22) Anmeldetag: 27.03.2000
(51) Int. Cl.: G06K 19/07, G01C 15/04

(54) **Vermessungsverfahren und Vermessungs- oder Vermarkungselement**

(30) Priorität: 25.03.1999 DE 19913480
(71) Anmelder: Scemtec Automation GmbH, 42551 Velbert (DE)
(72) Erfinder: Reich, Martin, 42553 Velbert (DE)
(74) Vertreter: Patentanwälte Lippert, Stachow, Schmidt & Partner

(57) **Zusammenfassung**

Der Erfindung, die ein Vermessungsverfahren, bei dem ein Vermessungskennzeichen gesucht und mittels kennzeichnender Daten identifiziert wird und anschließend zumindest die Daten des Vermessungs- oder Vermarkungselementes mit anderen Koordinaten in Verhältnis gesetzt werden, und ein Vermessungs- oder Vermarkungselement, bestehend aus einem Informationsträger, der in seiner geographischen Lage fixiert ist, betrifft, liegt die Aufgabe zugrunde, den arbeitstechnischen Aufwand von Vermessungsverfahren zu senken. Die Aufgabe wird dadurch gelöst, daß mit dem Informationsträger ein Transponder verbunden wird, in den zumindest die kennzeichnenden Daten gespeichert sind und der mittels eines Transponder-Lese-/Schreibgerätes gesucht und ausgelesen werden kann.

## Beschreibung

Die Erfindung betrifft ein Vermessungsverfahren, bei dem ein Vermessungs- oder Vermarkungselement gesucht und mittels das Vermessungs- oder Vermarkungselement kennzeichnender Daten identifiziert wird. Anschließend werden zumindest die Koordinaten oder Punktnummern des Vermessungs- oder Vermarkungselementes mit anderen Koordinaten zueinander in Verhältnis gesetzt.

Die Erfindung betrifft auch ein Vermessungs- oder Vermarkungselement zur Durchführung des Verfahrens, bestehend aus einem Informationsträger, der in seiner geographischen Lage fixiert ist.

Vermessungs- oder Vermarkungselemente dienen der Vermarkung. Zur Markierung verschiedener Vermarkungsarten sind beispielsweise Grenzsteine, topographische Punkte und übergeordnete Vermessungspunkte, Mauer- und Bodenzeichen, Bolzen usw. bekannt.

Weiterführende Vermarkungen dienen zur Kennzeichnung von Punkten oder wichtigen Linien, beispielsweise auf Baustellen, wo Festpunktnetze oder Höhennetze usw. aufgebaut werden.

Allen Vermessungs- oder Vermarkungselementen gemeinsam ist es, daß sie aus einem Informationsträger bestehen. Auf diesem Informationsträger sind Daten sichtbar, die das entsprechende vermessungs- oder vermarkungselement kennzeichnen. Dies kann beispielsweise eine Punktnummer sein. Anhand von Koordinatenverzeichnissen kann dann anhand dieser Punktnummer dem Vermessungs- oder Vermarkungselement weiter kennzeichnende Daten zugewiesen werden. So ist es beispielsweise möglich, anhand der Punktnummer die Koordinaten des Vermessungs- oder Vermarkungselements zu erfahren.

Zur eindeutigen Zuordnung sind die Informationsträger eines Vermessungs- oder Vermarkungselements in ihrer geographischen Lage fixiert. Beispielsweise sind Grenzsteine fest in die Erde eingelassen oder Mauerzeichen mittels Mauerbolzen fest mit dem Mauerwerk eines feststehenden Gebäudes verbunden.

Hierbei ist es auch möglich, daß Befestigungselemente vorgesehen werden, die der festen Verbindung beispielsweise mit Gebäuden dienen und an den der Informationsträger seinerseits befestigt ist.

In der Praxis zeigen sich bei der Verwendung derartiger Vermessungs- oder Vermarkungselemente Nachteile bei der Handhabung. So geschieht es beispielsweise bei Vermessungs- oder Vermarkungselementen, die sich in der freien Natur befinden, sehr oft, daß diese zuwachsen oder zugeschüttet sind. Damit wird ein wiederfinden nicht unerheblich erschwert, was den Zeitaufwand für einen Vermessungsvorgang erhöht.

Weiterhin wird für eine Zuordnung von Daten zu den kennzeichnenden Daten des Vermessungs- oder Vermarkungselements durch die Benutzung von entsprechenden Koordinatenverzeichnissen nicht unerheblich Zeit benötigt, insbesondere dann, wenn eine größere Datenfülle dem Vermessungelement zugeordnet werden soll.

Der Erfindung liegt somit die Aufgabe zugrunde, den arbeitstechnischen Aufwand von Vermessungsverfahren zu reduzieren.

Verfahrenstechnisch wird diese Aufgabe dadurch gelöst, daß ein mit einem Transponder versehenes Vermessungs- oder Vermarkungselement mittels eines Transponder-Lese-/Schreibgerätes gesucht wird, in dem das Transponder-Lese-/Schreibgerät ständig Signale sendet, bis eine Antwort von dem Transponder erhalten wird. Aus dem Transponder werden dann zumindest die kennzeichnenden Daten des Vermessungs- oder Vermarkungselements ausgelesen.

Für den Einsatz des Transponder-Lese-/Schreibgerätes ist lediglich die ungefähre Kenntnis der Lage des Vermessungs- oder Vermarkungselements im Gelände erforderlich. Sobald nämlich der Transponder in den Wirkungsbereich des Transponder-Lese-/Schreibgerätes gelangt, wird durch diesen das Feld des Transponder-Lese/Schreibgerätes verändert, was von diesem als Antwort gewertet wird. Somit kann mit dem Transponder kommuniziert werden.

Der Bereich, in dem eine Kommunikation mit dem Transponder möglich ist, ist hinreichend klein, so daß mit ausreichender Genauigkeit die Stelle des Vermessungskennzeichens definiert werden kann.

Aus dem Transponder können zumindest die kennzeichnenden Daten ausgelesen werden. Diese können wiederum in der einfachen Punktnummer bestehen. Jedoch wird es zweckmäßig sein, andere zusätzliche Daten zu speichern. Dies kann beispielsweise auch die direkte Speicherung der Lagekoordinaten des Vermessungs- oder Vermarkungselements bedeuten.

Zweckmäßig ist es, daß in dem Transponder außer den unbedingt notwendigen kennzeichnenden Daten auch Zusatzdaten der Vermarkung gespeichert werden. Diese können neben der Punktnummer auch Daten über die Gemarkung, das Flurstück, die Flur, die Koordinaten x, y und z in mehreren Ausführungen, Informationsteste und Hinweise bis hin zu Telefonnummern, Ansprechpartnern, Höhenangaben usw. sein.

Weiterhin ist es zweckmäßig, daß die in dem Transponder gespeicherten Daten ausgelesen und zumindest teilweise in einer externen Datenbank gespeichert werden. Dies liefert die Möglichkeit, daß eine Vermessungsauswertung direkt im Gelände an transportablen Rechnern, beispielsweise Notebooks vorgenommen werden kann.

Weiterhin ist es zweckmäßig, daß nach einem Auslesen von Daten aus dem Transponder aktualisierte Daten in den Transponder zurückgespeichert werden. Hierbei wird die Möglichkeit geschaffen, daß beispielsweise für eine nächste Benutzung Hinweistexte eingegeben werden oder daß das Datum des letzten Auslesens der Daten vermerkt wird.

Alternativ hierzu kann es zweckmäßig sein, daß der Transponder derart schreibgeschützt wird, daß nur ein Auslesen vorgenommen werden kann. Dies ist besonders beim Einsatz von Vermessungs- oder Vermarkungselementen an den Stellen sinnvoll, wo eine Manipulation des Dateninhalts der Transponder sicher vermieden werden muß, wie dies beispielsweise bei übergeordneten staatlichen Netzen oder Festpunktnetzen der Fall ist.

Anordnungsseitig wird die Aufgabe durch ein Vermessungs- oder Vermarkungselement gelöst, das dadurch gekennzeichnet ist, daß mit dem Informationsträger ein Transponder fest verbunden ist und daß in den Transponder zumindest das Vermessungs- oder Vermarkungselement kennzeichnende Daten gespeichert sind.

Durch diese Gestaltung wird es nach wie vor möglich, herkömmliche Informationsträger der eingangs genannten Art zu verwenden. Die Erfindung kann auch nachträglich realisiert werden, nachdem die Informationsträger oder Vermarkungselemente bereits in ihrer geographischen Lage fixiert sind.

Das Speichern der kennzeichnenden Daten kann entweder vor Ort, das heißt an der Stelle, an der sich das Vermessungs- oder Vermarkungselement befinden soll oder aber extern vorgenommen werden. Hier ist es beispielsweise möglich, an einem Desktop die Transponder vorzubereiten. Die weitere Handhabung der Transponder wie beim Verfahrensablauf beschrieben, kann sodann mittels eines Handterminals erfolgen.

Die Erfindung kann dadurch fortgebildet werden, daß in dem Transponder Zusatzinformationen gespeichert sind. Auch diese Zusatzinformationen können stationär oder vor Ort in den Transponder eingebracht werden.

Eine Ausführungsform der Erfindung sieht vor, daß der Informationsträger abdeckbar ist. Somit kann ein Vermessungs- oder Vermarkungselement unsichtbar untergebracht werden. Dies ist besonders an den Stellen zweckmäßig, wo das Anbringen von Vermessungs- oder Vermarkungselementen optisch störend wirken würde.

In einer weiteren Ausführungsform der Erfindung ist vorgesehen, daß der Transponder in dem Informationsträger eingelassen ist. Hierzu ist beispielsweise möglich, daß ein Grenzstein als Informationsträger verwendet wird und der Transponder in den Grenzstein eingegossen wird.

Durch eine solche Gestaltung wird die Zerstörungssicherheit des Transponders erheblich erhöht. Außerdem ist es möglicherweise einem solchen Grenzstein von außen nicht anzusehen, daß seine Informationen in einem Transponder gespeichert sind.

Eine weitere Ausgestaltung der Erfindung sieht vor, daß der Informationsträger durch den Transponder selbst gebildet wird. Hierbei ist es zum Beispiel möglich, den Transponder anstelle eines Mauerbolzens direkt auf ein Mauerwerk aufzukleben.

Um auch eine herkömmliche Nutzung eines derartigen Vermessungs- oder Vermarkungselements zu gewährleisten, könnten dann auch die kennzeichnenden Daten sichtbar auf den Transponder aufgedruckt werden.

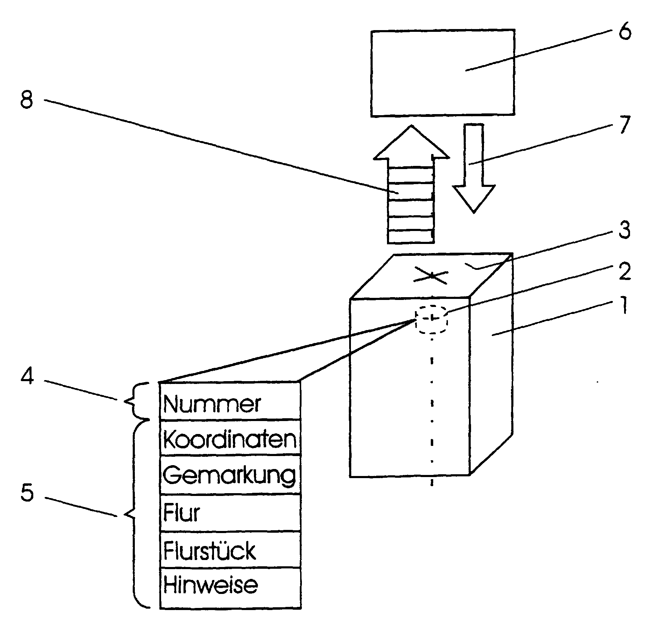

Die Erfindung soll nachfolgend anhand eines Ausführungsbeispiels näher erläutert werden. Die Zeichnung zeigt eine schematische Darstellung der erfindungsgemäßen Anordnung und des erfindungsgemäßen Verfahrens anhand eines Grenzsteines.

Ein Grenzstein 1 ist aus Beton gefertigt. In ihm ist ein Transponder 2 eingegossen. Dieser Transponder 2 befindet sich in der Nähe der Oberseite 3 des Grenzsteines 1.

In dem Transponder 2 sind den Grenzstein 1 kennzeichnende Daten 4 gespeichert. Zusätzlich zu den kennzeichnenden Daten 4 sind auch Zusatzdaten 5 im Transponder 2 gespeichert.

Da es sich bei dem Transponder 2 um ein aktives und passives Bauelement handelt, bleiben diese Daten ohne Energiezufuhr gespeichert.

Zum Suchen des Grenzsteines 1 wird ein Transponder-Lese-/Schreibgerät 6 verwendet. Dieses Lese-/Schreibgerät 6 sendet während des Suchvorganges kontinuierlich Erregungsdaten 7 aus. In der Nähe des Transponders 2 wird sich das Feld der Erregungsdaten ändern, was von dem Lese-/Schreibgerät 6 als eine Antwort verstanden wird. Damit wird festgestellt, daß sich das Lese-/Schreibgerät 6 in unmittelbarer Nähe des Transponders 2, das heißt, auch des Grenzsteines 1 befindet. Dies kann festgestellt werden, auch wenn der Grenzstein 1 im Laufe der Zeit zugewachsen sein sollte.

Die Erregungsdaten 7 des Lese-/Schreibgerätes 6 bewirken, daß mit dem Transponder 2 derart in Kommunikation getreten werden kann, daß seine Daten 4 und 5 in einem Auslesevorgang 8 ausgelesen und in dem Lese-/Schreibgerät 6 gespeichert werden können. Damit wird einerseits die Suche des Grenzsteines 1 erheblich erleichtert und andererseits auch die Identifikation des Grenzsteines 1 als Vermessungs- oder Vermarkungselement erheblich erleichtert.

### Bezugszeichenliste

- 1: Grenzstein
- 2: Transponder
- 3: Oberseite
- 4: kennzeichnende Daten
- 5: Zusatzdaten
- 6: Lese-/Schreibgerät
- 7: Erregungsdaten
- 8: Auslesevorgang

## Patentansprüche

1. Vermessungsverfahren, bei dem ein Vermessungs- oder Vermarkungselement gesucht und mittels das Vermessungs- oder Vermarkungselement kennzeichnender Daten identifiziert wird und anschließend zumindest die Koordinaten oder Punktnummern des Vermessungs- oder Vermarkungselements mit anderen Koordinaten zueinander in Verhältnis gesetzt werden, **dadurch gekennzeichnet,** daß ein mit einem Transponder (2) versehenes Vermessungs- oder Vermarkungselement (1) mittels eines Transponder-Lese-/Schreibgerätes (6) gesucht wird, in dem das Transponder-Lese-/Schreibgerät (6) ständig Signale (7) sendet bis eine Antwort von dem Transponder (2) erhalten wird, und daß aus dem Transponder (2) zumindest die kennzeichnenden Daten (4) ausgelesen werden.

2. Vermessungsverfahren nach Anspruch 1, **dadurch gekennzeichnet,** daß in dem Transponder (2) Zusatzdaten (5) gespeichert werden.

3. Vermessungsverfahren nach einem der Ansprüche 1 oder 2, **dadurch gekennzeichnet,** daß die in dem Transponder (2) gespeicherten Daten (4; 5) ausgelesen und zumindest teilweise in einer externen Datenbank gespeichert werden.

4. Vermessungsverfahren nach einem der Ansprüche 1 bis 3, **dadurch gekennzeichnet,** daß nach einem Auslesen (8) von Daten (4; 5) aus dem Transponder (2) aktualisierte Daten in den Transponder (2) zurückgespeichert werden.

5. Vermessungs- oder Vermarkungselement, bestehend aus einem Informationsträger, der in seiner geographischen Lage fixiert ist, **dadurch gekennzeichnet,** daß mit dem Informationsträger (1) ein Transponder (2) fest verbunden ist und daß in dem Transponder (2) zumindest das Vermessungs- oder Vermarkungselement (1) kennzeichnende Daten (4) gespeichert sind.

6. Vermessungs- oder Vermarkungselement nach Anspruch 5, **dadurch gekennzeichnet,** daß in dem Transponder (2) Zusatzinformationen (5) gespeichert sind.

7. Vermessungs- oder Vermarkungselement nach einem der Ansprüche 5 oder 6, **dadurch gekennzeichnet,** daß der Informationsträger (1) abdeckbar ist.

8. Vermessungs- oder Vermarkungselement nach einem der Ansprüche 5 bis 7, **dadurch gekennzeichnet,** daß der Transponder (2) in den Informationsträger (1) eingelassen ist.

9. Vermessungs- oder Vermarkungselement nach einem der Ansprüche 5 bis 7, **dadurch gekennzeichnet,** daß der Informationsträger (1) durch den Transponder (2) selbst gebildet wird.
